# EUROPEAN PATENT APPLICATION

(11) **EP 1 605 416 A1**
(43) Date of publication of application: **14.12.2005**
(21) Application number: 04425434.0
(22) Date of filing: 11.06.2004
(51) Int. Cl.: G07F 17/16, G06F 17/60

(54) **Method and system for the distribution of multimedia contents**

(71) Applicant: Emmetechnic SRL, 31044 Montebelluna (Treviso) (IT)
(72) Inventor: Martignago, Francesco, 31044 Montebelluna (Treviso) (IT)
(74) Representative: Agostini, Agostino

(57) **Abstract**

The present invention relates to a method and a system for the distribution on payment of multimedia contents for a user to avail him/herself thereof, in particular at his/her own home. The system comprises at least a portable support (200), in which the multimedia contents are stored and which includes storage means (220), adapted to store an information on the credit of the user, and a player (100) adapted to enable the user to avail him/herself of the contents and to gain access to said storage means (220) for updating the information on the user's credit according to the actual use that he/she makes of the contents themselves. The apparatus may further comprise at least an automatic terminal (300) having archive means, i.e. a library in which multimedia contents are filed and from which multimedia contents can then be transferred on to the support module (100) as selected by the user.

## Description

The present invention refers to a method and a related system for the distribution on payment of multimedia contents for a user to be able to avail him/herself thereof, in particular at his/her own home.

The demand for multimedia contents, such as for instance films, music, video games, presentations or encyclopaedias, has been growing at a fast pace during these last few years, as stimulated also by the breathtaking development of technological innovation. As a result, a growing number of business operations have come into existence for distributing against payment, in particular renting out, multimedia contents.

A known system for distributing multimedia contents, as related for instance to music recorded on compact discs (CD), is described in the patent application WO 022 5602, in which a terminal receives a list of songs that a user selects among those stored in a library, and then stores in a permanent manner these songs on a CD support. At this point, the user picks up the CD with the desired contents in view of listening to it wherever he/she may also wish. However, this system does not allow for any rental operation to be put in practice, actually, since the CD is bought by the user along with the contents thereof.

For reasons of greater simplicity, reference will only be made to films in the following description as a good example of the multimedia contents being discussed here, and this shall therefore by no means be intended as limiting the scope of the present invention.

In order to rent a film, so as to be able to view it at home on payment of a proper fee, a person can substantially make use of any of three possible options.

In the first place, a person may select to go to a distributor, such as for instance a so-called "blockbuster" shop or the like, that will rent out a support (for instance videocassette or DVD) containing the film to be viewed. With the aid of a usual videocassette or DVD player, that person will then run the film for viewing it on the TV screen at home.

A second option is to subscribe to a so-called pay-per-view television service, i.e. an interactive, dedicated television channel that allows for real-time dialogue between the user and the broadcasting television station. The user selects on the screen the film that he/she wishes to view and this film will then be broadcast on his/her own dedicated channel at the desired time and charged to the user in addition to the usual subscription fee.

In the third place, an Internet connection may be used to this purpose. There are in fact specialized sites that enable films selected from a library to be downloaded from said sites onto an own personal computer (PC). There are again a variety of ways in which a film can be used in this case. In particular, a downloaded film can be used unlimitedly if a regular subscription is running with that site, or just for a pre-determined period of time, in proportion to which a payment is made, in general electronically via credit card, to the provider.

Anyway, all of the above-described options have definite drawbacks.

In the first case, i.e. the system involving the local distributor, the need necessarily arise for considerable space to be devoted to the facilities in which the film supports must be put on display and kept in storage. In this connection it should be noticed that there must be held as many supports as the films being offered, multiplied by a factor of at least 4 or 5 in order to have copies of a same film for renting out to different users. Furthermore, the supports, by repeatedly passing from a customer to another one in the course of time, tend to eventually get damaged and must therefore be replaced at rather high costs.

As far as the user is on the contrary concerned, a major drawback lies in the fact that it quite often occurs that he/she goes to the film rental shop to just find that the desired film is not available at that moment. Then, further to the quite usual inconveniences brought about by the place being crowded and the long queuing time one has to wait to pay, those who rent several films, but then are able to view just some of them, must anyway pay for all of the films they actually rented. In a word, there is practically no system here allowing the user to just pay for what he/she is going to actually make use of. Finally, if a user wishes to rent many films at a time for viewing at home, the bulk of the corresponding supports proves certainly quite inconvenient for he/she to carry it home with him/her.

In the case of the second above-noted system, which does on the contrary not require any film support to be physically transported by a user, the most obvious drawback is certainly given by the inherent complexity of the system itself. If a user avails him/herself of a television broadcast link through space, generally from a satellite, it may quite often occur that the transmission is more or less heavily disturbed or even interrupted by the effects of bad weather or bad propagation. If on the contrary the user avails him/herself of a cable-television link, he/she shall have his/her house properly wired to include a digital-signal transmission cable, such as for instance an optical-fibre cable, and this generally implies sustaining rather high costs.

The third option requires that a PC and a fast-rate Internet line be available to the user, in order to avoid waiting a lot of time (generally several hours) for the film to be fully downloaded or, in the case of real-time transmission, i.e. streaming as this is called in the technical parlance, to be able to view the film under acceptable quality conditions. Both in the downloading and the streaming case, network link or connection problems may anyway seriously affect the operation of the system.

It therefore is a main object of the present invention to provide a new system for distribution of multimedia contents on payment, in particular on a renting basis, that does away with all of the above-noted drawbacks of prior-art solutions, while at the same time enabling a user to only pay for the multimedia contents which he/she actually used

According to the present invention, these aims are reached in a system that incorporates the characteristics as recited in the appended claims to comprise at least:
- a portable support adapted to store, preferably in a coded and protected form, both said multimedia contents, which the user is then able to conveniently carry home with him/her, and all necessary data and pieces of information in connection with the actual use of those contents and the management of the user's credit;
- a player adapted to read and decode the multimedia contents stored in said portable support, so as to enable the user to make use of all or part of such multimedia contents as he/she may possibly select, and to charge the user with only the contents which he/she made actually use of, by deducting from the user's credit stored in said module a pre-determined amount after each use that is made of said contents.

A number of different variants of the above system can be of course devised: So, for instance, it is possible for portable supports pre-loaded with multimedia contents (music, games, scientific treatises and the like) to be offered and delivered to the user, who then will only pay for those contents which he/she actually made use of (through the player). Or the system may be extended to enable the user him/herself to decide which multimedia contents have to be loaded in the portable support, actually. In this case, the system will also include:
- at least a distribution terminal which, with the aid of and through known means (screens, keyboard, touch-screen, printers, sound indicators and the like), is capable of interacting with the user, receiving the requests entered by the user concerning the multimedia contents he/she likes to rent, storing such contents, preferably in a coded and protected form in the portable support, delivering such portable support to the user and/or taking in the one to be loaded, managing the rental payment service by acquiring such payment by any known means (cash, debit card and the like), while retaining all relevant information on the user's credit and storing the same on said support;
- at least a central processing and switching unit, to which various distribution terminals are connected, preferably via a star network, to collect the data from said terminals, process them and make them available at each terminal of the network.

The features and advantages of the present invention shall anyway be more readily understood from the description of a preferred, although not sole embodiment thereof dedicated to multimedia contents consisting of digitally formatted films (audio-visual files), which is given below by way of nonlimiting example with reference to the accompanying drawings, in which:
- Figure 1 is a schematical view of the system, in particular of a player;
- Figure 2 is a schematical plan view of a distribution terminal;
- Figure 3 is a schematical view of a portable support;
- Figure 4 is a schematical view of various distribution terminals connected to a central unit;
- Figure 5 is a schematical view of an interface for the portable support shown in Figure 3.

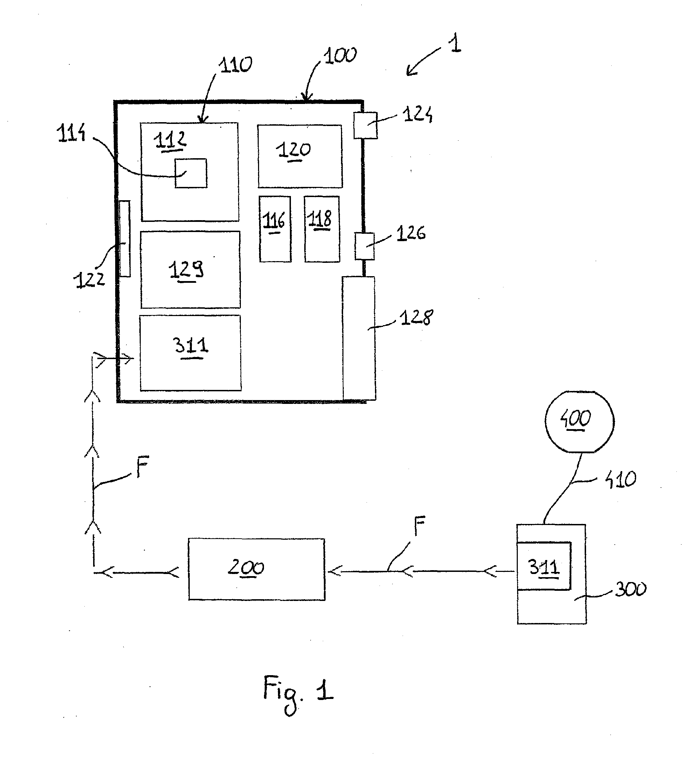

With reference to Figure 1, this can be noticed to illustrate a system 1 according to the present invention, which comprises:
- a player 100, which is used by the user to play the films, usually at his/her own home;
- an distribution terminal 300, containing a library of films for the user to select from;
- a portable support 200 for the conveyance of the films that the user is able to download from the distribution terminal 300 and view with the aid of the player 100;
- a central unit 400 that connects to the terminal 300 in order to handle the data thereof and exchange them with a possibly existing plurality of terminals 300 connected thereto.

In particular, the central unit 400 ensures a coordination of the credit of the user. It may be contemplated that the information about the user's credit is stored permanently in an encrypted form on the sole portable support, while a local copy thereof can be obtained in the distribution terminal or in the player only when needed. Or such information may be constantly present and available either in all components of the system 1 or in just some of them.

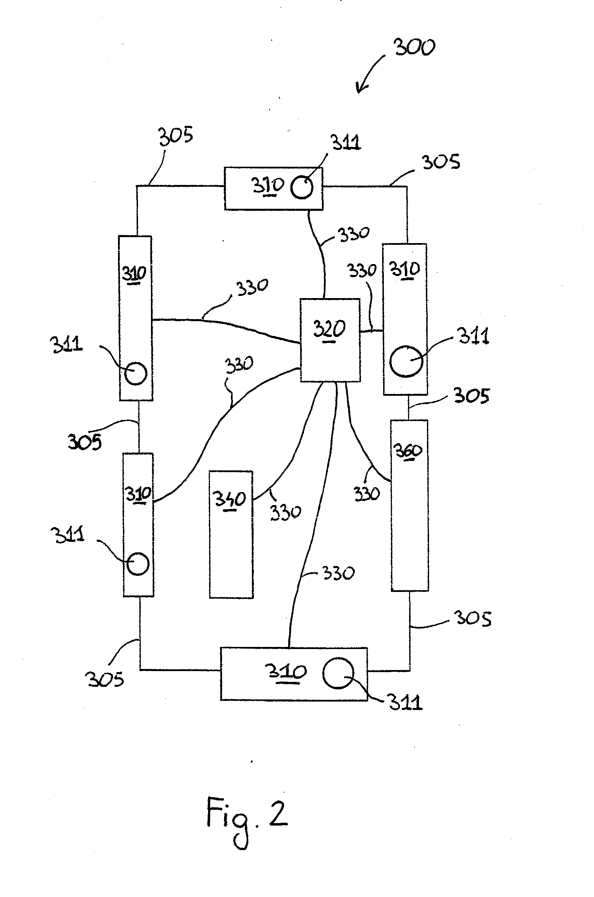

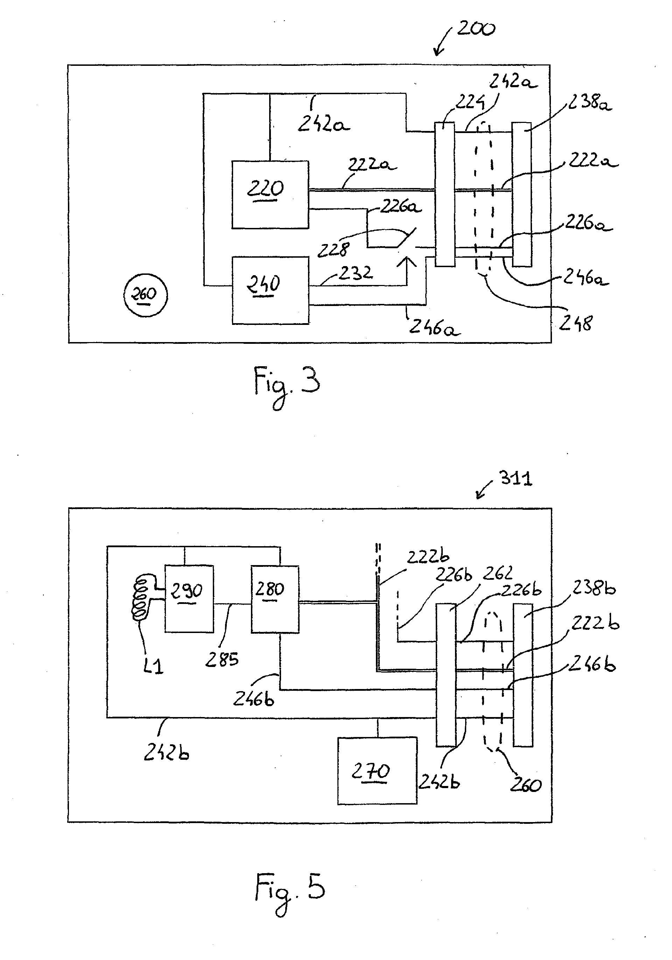

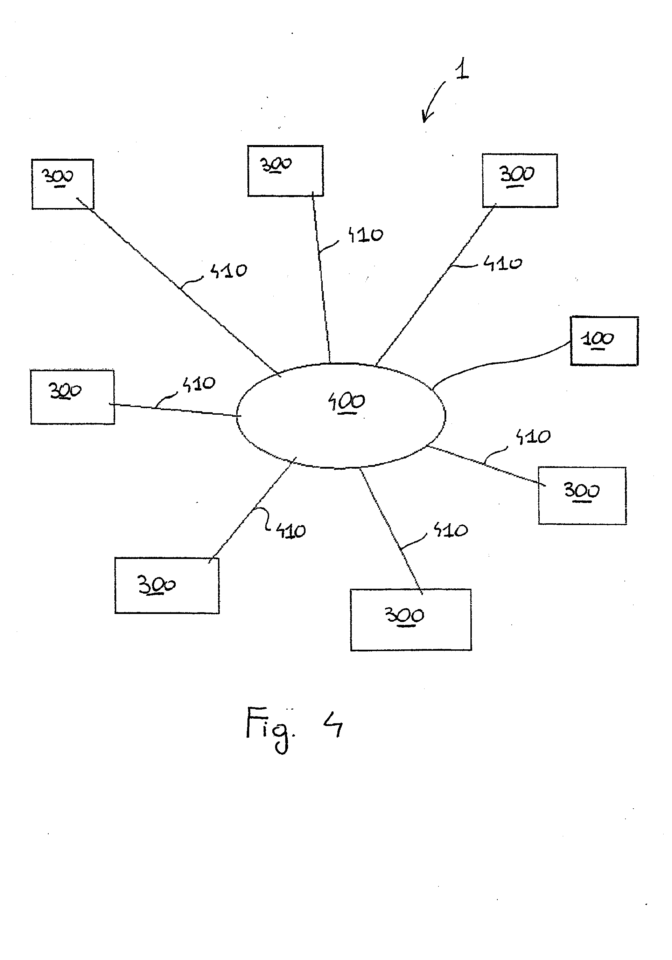

The distribution terminal 300 (see also Figure 2) is substantially a library (data bank) of films in a digital format, from which a user is able to select and take out those he/she wishes to rent for viewing at home. It is preferred that a number of terminals 300 be provided and present in the area covered by the system 1, such that the user is able to most easily and conveniently reach one of them. As a result, the terminal 300 will be installed in easily accessible and highly frequented, crowded places, such as for instance trade and shopping centres, stations, high streets, and the like. As far as the appearance of this terminal 300 is concerned, it generally looks like a more or less traditional automatic vending machine. It has a column-like chassis 305, on the periphery of which there are arranged so-called inquiry and dialogue modules 310 (consultation module) enabling information to be exchanged with the users. In turn, each one of these modules 310 comprises appropriate user interfaces of a kind known in the art, i.e. a touch-screen, a chip-card reader, the function and operating mode of which shall be explained in greater detail further on, a module for inserting coins and banknotes, and an audio diffusion system (not shown) On the module 310 there is provided an interface 311 (see also Figure 5) enabling it to be both mechanically and electrically connected to a portable support module 200. Via connections 330 known as such in the art, these interfaces are managed, controlled and driven by a base module 320 that comprises a programmable microprocessor-based system, service read-only and random-access memories, as well as a plurality of hard disks (all not shown in the Figures) for storing the files of the films to be rented along with the related service information. These files will have been first coded and encrypted prior to being stored onto said hard disks, so as to be unable to be used outside of, i.e. to be practically unworkable but with the system 1 of the present invention.

Connected again to the base module 320 via connections 330 known as such in the art there is provided, alongside an inquiry and dialogue module 310, a so-called delivery/withdrawal module 360, which comprises a touch-screen, one or more stores of portable modules 200, e.g. provided in the form of a rack arrangement, and a reader/dispenser of chip cards (not shown). To such delivery/withdrawal module 360 there is associated a motor-operated mechanical device 340 adapted to introduce a portable support 200 into the distribution terminal 300, move it within said terminal during the various operating steps, as this shell be described in greater detail further on, and release it outside for delivery to the user.

The portable support 200 is in the form of a cartridge. As illustrated in Figure 3, it comprises a bulk-storage memory unit 220, such as for instance a high-capacity hard disk, interfaced with an IDE connector 224 in a generally known manner via a bus 222a. The selection signals for the memory 220 flow in from the connector 224 through a data bus 226a interrupted by a normally open electronic switch 228 triggered by a control signal 232 outputted by a microprocessor 240 provided with internal ROM and RAM memories. The bus 222a and the data bus 226a are included in a flat cable 248, which is indicated within a space enclosed by dashed lines in Figure 3, and end up at, i.e. are adapted to attach to a connector 238a provided on the outside of the cartridge, through which the memory 220 is able to receive and send out data. From this connector 238a, a power-supply line 242a included in said flat cable 248 is adapted to provide a supply voltage from outside to the portable support 200, in particular to the memory 220 and the microprocessor 240 thereof. The latter is reached, via the two connectors 224, 238a, by a data bus 246a. Also this data bus 246a is included in the flat cable 248. Associated to the portable support 200 there is further a passive read-only transponder tag 269 of a known kind, which is programmed by its own manufacturer with a univocal code. Anyway, in view of being able to further expand the function of the system 1, use can also be made of a programmable transponder tag.

The support 200 uses the connector 238a to solely connect to either an interface 311 of the distribution terminal 300 or a similar interface 311 provided on a player 100, as this is illustrated schematically by the arrows F in Figure 1. However, the interface 311 provided on the terminal 300 and the one existing on the player 100 perform different operations, owing to them being programmed in a different manner.

Particular locations in the memory 220 contain, in a coded form, the information concerning the credit of the user, so that such information can be acquired and/or modified when needed, as this shall be described in greater detail further on. Similarly, an area in said memory 220 is specially devoted to hold the list of the films that are available for rental.

The player 100 comprises a central module 110 having a motherboard 112 and a microprocessor 114 that are built and organized in a generally known manner.

Associated to this central module 110 there is a main memory unit 120 having both a RAM and a ROM, in which there is stored the operating system for said processor 114. The central module 110 drives an interface 311 for the portable support 200, similar to the interface provided on the inquiry and dialogue terminal 310, enabling it to read into the memory 220.

Associated to the central module 110 there are further a graphic card 116 and an audio card 118 of any kind known as such in the art, which are adapted to deliver a video and sound signal for the TV set (not shown) of the user, to which the player 100 is connected via a TV module 126. A unit 122 comprising a display (such as for instance a liquid-crystal display or a dot-matrix display) and a keyboard, enables information to be displayed concerning the state of the player 100 (track number, viewing time, time of the day, and the like), as well as an input to be entered. In order to enter said input, the player 100 may also be provided with a remote control (not shown). Information pertaining to the selection of films, both for viewing and ordering, are shown on the screen using a generally known on-screen display (OSD) technique.

The player 100 is supplied in a manner known as such in the art by a power-supply card 124 connected to the power-supply mains. Provided there are also an interface 128 for connecting to Internet and receiving digital signals from satellite, as well as a conventional DVD player 129, wherein the data concerning the operation of this player are again displayed on the above-mentioned unit 122. The interface 128 may be adapted to enable data to be exchanged and transferred between a player 100 and a distribution terminal 300, or a central unit 400. For instance, this connection may be used to update the user's credit stored in the central unit 400 (or in the terminal 300) in the case that the support module 200 contains just a service copy thereof.

For reasons of greater simplicity and clarity, the connections - of a kind generally known as such in the art - between the various elements provided and existing inside the player 100 are not specifically shown in the Figures.

As already noted hereinbefore, various terminals 300 may be provided at a number of different sites all over the territory. As a result, the need arises for a centralized management thereof to be provided, so that a user will be able to freely use anyone of them without any distinction. With reference to Figure 4, several distribution terminals 300 are connected to a central processing and switching unit 400. The connection lines 410 used to such purpose are preferably telephone cables, either containing dedicated lines or not, along which there are capable of travelling digitalized information bits, for instance through an Internet link of any known kind. Use may of course be made of optical-fibre cables or even radio links, i.e. transmissions through space, which are certainly capable of ensuring higher transmission speeds, but are much more expensive. The above-mentioned central unit 400, acting as a hub for the distribution terminals 300 connected thereto, is adapted to exchange data therewith. This central unit 400 is further capable of interfacing - again via a connection line 410 in a manner known as such in the art - with the interface 128 of a player 100 to exchange data therewith (only a single player 100 is shown in Figure 4 for reasons of greater simplicity, while it shall anyway be appreciated that each single user is able to connect thereto).

The star configuration existing between the central unit 400 and the terminals 300 - which uses access criteria and protocols generally known in the art - has the advantage of making the information acquired by any terminal 300 immediately available to all other terminals 300 connected to the central unit 400, such information including for instance the user's credit. In this way, in the case that a user selects to carry out some operations at a given terminal 300, and goes then also to another terminal 300, the "history", i.e. the records and the effects of such previously performed operations will not be lost.

With reference to Figure 5, an interface 311 is now described for connecting the portable support 200 to both the distribution module 300 and the player 100. A connector 238b, adapted to both mechanically and electrically connect to the connector 238a of the portable support 200, is provided at a conveniently accessible location. This connector 238b connects to an internal connector 262 via a flat cable 260, which is indicated within a space enclosed by dashed lines in Figure 5. Included in this flat cable 260 there are a bus 222b, two data lines 226b and 246b, and a power-supply line 242b. When the two connectors 238a and 238b are joined together, these last-mentioned electrical connections, the reference numerals of which are assigned the suffix "b", connect to corresponding connections contained in the portable support 200, which are indicated with the same reference numerals carrying the suffix "a". Of course, the connector 262 and the flat cable 260 enable the connector 238b, which receives the module 220 in a position that is functionally convenient for the user, to be connected to the electronic cardss containing all the above-mentioned components, which are arranged inside the distribution terminal 300 or the player 100.

From said connector 262, the bus 222b extends to reach a microprocessor (not shown in Figure 5), which in the case of the player 100 is the processor 114 and, in the case of the distribution terminal 300, the processor contained in the base module 320. In both cases, this bus 222b enables data to pass to and from the memory unit 220.

The power-supply line 242b connects to a circuit 270 that supplies stabilized supply voltages on to said line 242b. In turn, the line 242b supplies a decoding transponder circuit 290, comprising for instance an Atmel U2270B I.C., a microprocessor 280 provided with internal RAM and ROM, as well as the support 200 via the line 242a. The circuit 290 comprises a coil antenna L1 and communicates with the microprocessor 280 via a line 285. The processor 280 connects to both the connector 262, via a line 246b extending up to the outside connector 238b, and the bus 222b.

The operations that the system 1 enables a user to perform in order to select one or more films are the following ones, as subdivided into three main modes in which the system 1 can be operated and used.

First operating mode: withdrawing the selected films at the distribution terminal 300.

At this terminal, with the help of any of the inquiry and dialogue modules 310 provided there, the user causes the complete list of the films available for rental, and stored in the base module 320, to be displayed. Through a user-interface of an inquiry and dialogue module 310, the user enters, as an input to to the base module, his/her choices on the films he/she wishes to rent. Two options turn up at this point, i.e.:
- the user connects his/her own portable support 200 to the distribution terminal 300, thereby completing the connection between the connector 238a on the support 200 and the connector 238b provided on the interface 311. The base module 320 searches out the files containing the selected films in the hard disks provided therewithin and copies them onto the bulk-storage memory 220 provided in the portable support 200. This occurs in the case that only a few films are withdrawn, when no excessively long waiting time is required;
- if a greater number of films is required, the user can hand over the portable support 200 to the distribution terminal 300 through the proper delivery/withdrawal module 360. The requested films will then be transferred onto the portable support 200 inside the distribution module 300, wherein said portable support 200 is withdrawn and moved into said distribution terminal 300 by the motor-operated mechanism 340. Through said delivery/withdrawal module 360, a chip card containing an identifier code of the thus handed-over portable support 200 is issued to the user. After a period of time as considered necessary for his/her support 200 to be completely loaded with the requested films, the user can then go back to the distribution terminal 300, enter a personal identification password and get the portable support 200 with the requested films stored therein. Said support module 200 will be released to the user via said delivery/withdrawal module 360 upon insertion in the distribution terminal 300 of the chip card, on which the data used by the motor-operated mechanism 340 to retrieve the support 200 to be picked up are stored.

Second operating mode: booking from the player 100 under possible withdrawal of the portable support 200.

The user is at his/her own home and has inserted the portable support 200 in the player 100, thereby establishing a connection between the connector 238a on the support 200 and the connector 238b provided on the interface 311 of said player 100. Using the remote control, or via the control unit 122, he/she orders the central module 110 to display the list of all films available on the screen of his/her own TV. Thereupon, the central module 110 reads said list out of the memory 220 of the support 200 and displays it on the TV screen. At this point, the user is able to select the films he/she wishes to view. These operations are handled and managed via software by the central module 110, which, upon processing out the input entered by the user, stores it in the memory 220 of the portable support 200, using the bus 222a, 222b and the data lines 226a, 226b to this purpose. At this point, the user takes out the portable support 200 from the player 100 and goes to the distribution terminal 300, where the same file transfer operations - from the library of the base module 320 to the memory 220 - as the ones described above in connection with the first operating mode. It will be not necessary for the films to be withdrawn to be indicated to an inquiry and dialogue module 310 if the temporary withdrawal of the portable support 200 is selected, since the base module 320 will then read the list of the films to be stored in the portable support 200 directly from the latter.

Third operating mode: booking from the player 100 under release of a new portable support 200.

The user is at his/her own home and, in the same way as in the second operating mode, causes the list of available films to be displayed and selects the films to be rented therefrom. Through the network interface 128, the central module 110 sends the information concerning the selected films to the central unit 400. The latter accepts the booking, i.e. the request, and determines which distribution terminal 300 will release the portable support module 200 with the requested films, by sending it - via a line 410 - the command to prepare and arrange a portable support 200 with said selected films duly stored in the memory 220 thereof. With the aid of the motor-operated mechanism 340, the automatically selected distribution terminal 300 takes a portable support module 200 from its store and, upon the files containing the films to be rented out having been stored thereupon, it makes it available for a delivery module 360 to hand it out. The user, duly informed by the related indications appearing on the screen of his/her home TV set about where and when he/she can collect the portable support 200, will then go to the thus indicated distribution terminal 300, return his/her own portable support 200 to the withdrawal module 360, and receive another portable support 200 having the previously selected films stored therein. The interaction with the distribution terminal 300 takes again place through an inquiry and dialogue 310 and/or a delivery/withdrawal module 360, so as this has already been described in connection with the other operating modes. In this case, however, also a personal secret code of the user, which is provided in the microprocessor 240 of the portable support 200 returned - and which shall be dealt with later on in this description - is updated accordingly, so that a user will always have a same code associated to him/her.

Owing to the system 1 requiring that each single user be dealt with univocally, the system 1 must necessarily be provided with a recognition step between the portable support 200 and the terminal 300. This recognition step is repeated at the beginning of each of the three operating modes described above, i.e. prior to the connectors 238a, 238b being connected to each other. It is further necessary for adequate protection measures to be taken against any possible kind of unauthorized or illicit use of the films. This is anyway supported by the fact that the portable support 200 is made and built such that any attempt to open it will irreparably damage the components provided therewithin, thereby making it absolutely unusable, and that the connectors 238a, 238b have proprietary (i.e. non-standard) electrical connections.

As far as the description of the above-mentioned recognition step, reference should be made to Figures 3 and 5.

When the user approaches the portable support 200 to the distribution terminal 300 and, therefore, to an interface 311, the circuit 290, which generates the radio-frequency signal required to energize the passive transponder tag 269, is able to read, with the aid of the coil antenna L1, the code of said transponder 269. If this code is correctly recognized as belonging to a user of the system 1, this circuit 290 will send, via the line 285, an enable signal to the microprocessor 280, which will in turn enable, via the bus 222b, a guillotine-type access lid and a motor-operated jaw (not shown) so as to grasp the portable support 200 and moving it on until its connector 238a plugs into the connector 238b of the interface 311.

Upon said connectors 238a, 238b having so been allowed to connect with each other, the circuit 270, via the lines 242b, 242a, ensures the power supply to the components of the portable support module 200.

At this point, the microprocessor 240 sends along the line 246a a secret serial personal code - which is univocally associated to a user (each user has one) - and this code is read on the line 246b by the microprocessor 280 and sent by this microprocessor, via the bus 222b, to the base module 320. The latter will check for the existence of a matching code in the customers' file. In the affirmative, the base module 320 sends, via the bus 222b, a positive recognition signal to the microprocessor 280. This microprocessor 280 starts then to send, via the lines 246b, 246a, appropriate commands to the microprocessor 240, which in turn, via the line 232, commands the switch 228 to close, thereby enabling data to flow from the line 226b through the line 226a. Owing to the fact that the availability of these data on the line 226a is absolutely necessary for the memory 220 to be able to be read, it can be readily appreciated that such authentication constitutes a formidable security measure.

Through the bus 222b, the microprocessor 280 informs the base module 320 that the data in the memory 220 are now accessible.

Prior to the functions of an inquiry and dialogue module 310, or a delivery/withdrawal module 260, to be able to be accessed by a user, the latter is requested, via the user's interfaces, to enter an access code, i.e. a password. This access code, or password, is then processed by the base module 320 and compared with a code stored in the memory 220. If the codes are found to match, the user is authorized to go on with the operations on the terminal 300.

However, in the case that the personal code or the access code are not recognized, the terminal 300, after allowing for a certain number of attempts to be done, eventually withdraws the portable support module 200 definitively.

Means (not shown) must be provided to enable the microprocessor 240 to be programmed directly on the portable support module 200, for instance by adding a connector enabling serial programming of a flash ROM built in the microprocessor 240, so as to communicate to such microprocessor the serial code of the support module 200 in which it is built in. In particular, this serial code is stored in the microprocessor 240 either the first time that a portable support 200 is delivered to a user or when the third above-described renting procedure, i.e. third operating mode is carried out.

In the case of a mutual recognition between a portable support 200 and a player 100, the procedure concerning the identification of the transponder 269 on said portable support 200 is as follows.

The connectors 238a, 238b are brought into joining with each other manually by the user, when the latter connects the portable support 200 to said player 100.

The code of the passive transponder 269 is read by the circuit 290. If this code is recognized as correctly belonging to a user of the system 1, said circuit 290 will send, via the line 285, a signal to the microprocessor 280, which, via the data bus 246b, 246a, commands the microprocessor 240 to cause the switch 228 to close, as in the formerly considered case, and to enable the memory 220 to be read by the player 100 on the bus 222b and the line 226b.

Once that a user has stored in the portable support 200 the films he/she wishes to view, following to this purpose any of the three afore-considered modes, in order to now start to view those films he/she has to perform the following sequence of operations.

He/she starts by connecting the portable support 200 to the player 100, in particular by in this way bringing about the connection of the connector 238a on said support 200 with the connector 238b of the interface 311 provided on the player 100.

With the aid of the control unit 122 or the remote control, the user then tells the player 100 that he/she wishes to view a film. The central module 110 - after going through a recognition step similar to the afore-described one - reads via the buses 222b, 222a and the data line 226b, 226a a particular area of the memory 220, where there is stored a list of the films contained in the portable support 200 and causes this list to be displayed on the TV screen by appropriately driving the graphic card 116. These operations, as performed by the processor 114 of the central module 110, are coded in the operating system provided in the ROM of the main storage memory 120.

When the user, with the aid of the remote control or the control unit 122 on the player 100, selects a film for viewing, the central module 110 reads from the portable support 200 a software enabling the films to be decrypted, i.e. decoded, and transfers such software into the memory 120, where it will be executed. By executing it, this software will then:
- read from the bulk-storage memory 220 a data block relating to the film to be played, and transfer this block into the RAM of the main memory 120;
- carry out the real-time decoding of said block in said RAM memory;
- appropriately drive the audio and video cards 116 and 118 in accordance with the decrypted data, so as to correctly play the film.

As far as the way the user's credit is managed and the way it is charged are concerned, this occurs as follows. Upon expiry of a ten-minute playtime, i.e. when it is ten minutes that a film is being played, the central module 120 deducts from the credit stored in the bulk-storage memory 220 of the portable support module 200 the price set for viewing the film: From now on, the user will enjoy free access to the film, and will also be able to view again some parts thereof, for a total time equal to the duration of the film plus ten minutes. When this time interval eventually elapses, the film can be viewed by paying, i.e. being charged a time-based rate. The film can also be viewed more than once: the second time and the subsequent ones, however, by again paying, i.e. being charged a time-based rate.

Should a user's credit run into debt, i.e. the user is viewing a film costing more than actually available on his/her credit amount, such debt is recorded by the central module 120 in the bulk-storage memory 220 of the portable support 200. At a later time, when the user visits a distribution terminal 300, he/she will be asked to settle that debt in addition to the credit to be restored, under penalty of being banned from the system 1. Payment may be done in cash, which the distribution terminal 300 will take possession of through the appropriate coin/banknote insertion module, or by debit card, in which case he/she will enter all pertaining data through an inquiry and dialogue module 310.

It will be appreciated that the system of the present invention may also be used in connection with contents that are different from the above-considered films, such as for instance interactive games. The user can load a support with various games to just pay for the ones he/she actually plays or for the actual playtime.

On the same support, also, contents of different type can be stored, being a task of the support player to manage all the different playing modalities.

It will also be readily appreciated that the system as described above and illustrated in the accompanying drawings may be the subject of a number of conceptually minor variants and modifications without departing from the scope of the present invention as defined in the appended claims.

## Claims

1. Method for distributing on payment multimedia contents, comprising the steps of:
- providing and arranging a portable support (200) for the multimedia contents, which includes memory means (220) adapted to store an information on the user's credit;
- providing the user with a player (100) to enable him/her to make use of said multimedia contents stored in said portable support (200), said player being adapted to access said memory means (220) and update said information in accordance with the actual use that such multimedia contents are made of by the user.

2. Method according to claim 1, **characterized in that** said multimedia contents are encrypted and/or only accessible upon the user having been duly identified and recognized.

3. Method according to claim 2, **characterized in that** a software used by said player (100) to decrypt said multimedia contents is stored on said support (200).

4. Method according to any of the preceding claims, **characterized in that** the player (100) automatically deducts a pre-determined amount from the user's credit when a multimedia content is being used.

5. Method according to any of the preceding claims, **characterized in that** it further comprises the step of providing at least an automatic terminal (300) having a library of multimedia contents, which is adapted to transfer contents from said library onto said support (200) as selected by the user.

6. Method according to claim 5, **characterized in that** said at least a terminal (300) manages the opening, the reconstitution and the balance of the user's credit.

7. Method according to claims 5 or 6, **characterized in that** said at least a terminal (300) is connected via a data line (410) to a central processing and switching unit (400) exchanging data with said at least a terminal (300).

8. Method according to any of the preceding claims 5 to 7, **characterized in that** said terminal (300) withdraws the support module (200) returned by the user to load it with the multimedia contents selected by the user him/herself, and delivers it again to the user after a pre-set period of time.

9. Modular vehicle according to any of the preceding claims 5 to 8, **characterized in that** said terminal (300) receives from the user, via a remote connection (410), the booking entered by him/her about the multimedia contents that have to be loaded in a support module (200).

10. Method according to any of the preceding claims, **characterized in that** said memory means (220) comprise a hard disk.

11. Method according to any of the preceding claims, **characterized in that** said support (200) comprises means (260) enabling the same support to be identified univocally.

12. Method according to any of the preceding claims, **characterized in that** said portable support (200) includes means for univocally identifying the user, whom the support module belongs to.

13. Method according to any of the preceding claims 6 to 12, **characterized in that** associated to the user there is a personal code for accessing said terminal (300).

14. Method according to any of the preceding claims, **characterized in that** said multimedia contents are audio-visual files.

15. Method according to any of the preceding claims, **characterized in that** stored in said support module (200) there is a list of the multimedia contents available to the user.

16. System for carrying out the method according to any of the preceding claims, comprising at least:
- a portable support (200), in which there are stored the multimedia contents,
- a player (100) enabling the user to avail him/herself of the multimedia contents of said support (200) on command,
**characterized in that** said support (200) is provided with memory means (220) to store an information on the user's credit therein.

17. System according to claim 16, **characterized in that** said player (100) comprises an interface (311) for accessing said memory means (220) and updating said information in accordance with the use that is actually made of said multimedia contents.

18. System according to any of the preceding claims, **characterized in that** it comprises at least an automatic terminal (300) that has at least a bulk-storage memory acting as a library of multimedia contents, and at least an interface (311) for said portable support (200), through which contents can be transferred from said library into said support as selected by the user.

19. System according to claim 18, **characterized in that** said terminal (300) further comprises a delivery/withdrawal module (360), through which the portable support (200) can be delivered to and returned by the user, and a motor-operated mechanism (340) for moving said portable support (200) inside said terminal.

20. System according to claims 18 or 19, **characterized in that** said terminal (300) further comprises interfaces (310) enabling it to exchange information with a user.

21. System according to any of the preceding claims 18 to 20, **characterized in that** said terminal (300) further comprises interfaces (310) for opening, reconstituting and balancing a user's credit.

22. System according to any of the preceding claims 18 to 21, **characterized in that** it further comprises a central processing and switching unit (400), to which said at least a terminal (300) is connected via a data line (410).

23. System according to any of the preceding claims, **characterized in that** said portable support module (200) comprises a hard disk (220), on which said multimedia contents are stored.

24. System according to any of the preceding claims 17 to 23, **characterized in that** said portable support (200) further comprises an electronic identifier tag (269) adapted to be recognized by sensors (L1, 290) provided on said interface (311).

25. System according to claim 24, **characterized in that** said electronic identifier (269) is a transponder and said interface (311) comprises a radio transceiver (L1, 290) adapted to energize and recognize said transponder.

26. System according to any of the preceding claims, **characterized in that** said portable support (200) comprises electronic switch means (228) on at least a data line (226a) to enable signals relating to said multimedia contents to pass therethrough.

27. System according to claim 26, **characterized in that** said electronic switch means (228) are triggered by a control signal (232) from a microprocessor (240) that, upon recognizing the user's identification code, authorizes the passage of said signals.

28. System according to any of the preceding claims, **characterized in that** said player (100) comprises a card (128) for connecting to Internet.

29. System according to any of the preceding claims, **characterized in that** said player (100) comprises a microprocessor (114) with associated RAM and ROM data-storage means.

30. System according to claim 29, **characterized in that** said portable support (200) is further provided with a memory (220), on which there is stored a software used by said player (100) for making said multimedia contents playable and usable by the user.

31. System according to any of the preceding claims, **characterized in that** said portable support (200) comprises memory means (220) for storing the list of multimedia contents that are available to the user.

32. System according to any of the preceding claims, **characterized in that** said multimedia contents are stored in said portable support (200) in the form of files.

33. System according to claim 32, **characterized in that** said files are audio-visual files.
